Europäisches Patentamt

European Patent Office

Office européen des brevets

(11) Numéro de publication: **0 391 753**
**A1**

## (12) DEMANDE DE BREVET EUROPEEN

(21) Numéro de dépôt: **90400338.1**

(22) Date de dépôt: **07.02.90**

(51) Int. Cl.⁵: **C05F 17/00, C05F 17/02, F26B 21/06**

Le titre de l'invention a été modifié (Directives relatives à l'examen pratiqué à l'OEB, A-III, 7.3)

(30) Priorité: **08.02.89 FR 8901609**

(43) Date de publication de la demande:
**10.10.90 Bulletin 90/41**

(84) Etats contractants désignés:
**AT BE CH DE ES GB GR IT LI NL SE**

(71) Demandeur: **Tempe, Maurice**
**11, Rue des Bijoutiers**
**F-30300 Beaucaire(FR)**

(72) Inventeur: **Tempe, Maurice**
**11, Rue des Bijoutiers**
**F-30300 Beaucaire(FR)**

(74) Mandataire: **CABINET BONNET-THIRION**
**95 Boulevard Beaumarchais**
**F-75003 Paris(FR)**

(54) **Procédé et installation de ventilation et de régulation pour le traitement d'un produit organique humide et fermentescible.**

(57) Il s'agit d'une manière générale du traitement d'un quelconque produit organique humide et fermentescible (10) impliquant une circulation d'air à travers ce produit régulée en fonction de la valeur d'une grandeur liée à son état.

Suivant l'invention, on compare la valeur relevée de la grandeur concernée à une valeur donnée, programmée à l'avance et considérée comme idéale pour le débit d'air du moment, et on modifie ce débit d'air si la valeur relevée de cette grandeur s'écarte de cette valeur idéale.

Application notamment au traitement de déchets industriels ou agricoles, en particulier de boues d'épuration.

FIG.1

EP 0 391 753 A1

**Procédé et installation de ventilation et de régulation pour le traitement, en particulier déshydratation et stabilisation, par voie biologique, d'un quelconque produit organique humide et fermentescible**

La présente invention concerne d'une manière générale le traitement de produits organiques humides et fermentescibles, qui, sans autre, seraient normalement à mettre en décharge, à dénaturer, à rejeter à l'égout ou à détruire.

Il s'agit, en pratique, le plus souvent, de déchets industriels ou agricoles, tels que par exemple des boues d'épuration, mais il peut s'agir aussi bien de retraits agricoles du type de ceux pratiqués pour le soutien des cours.

Pour le traitement de tels produits organiques, il a été envisagé de leur appliquer la technique du compostage rustique consistant à les épandre en andain(s), soit isolément soit mélangés à d'autres produits organiques, en vue de la production de produits d'amendement pour les sols et/ou de substrats de culture.

Ainsi qu'on le sait, en effet, lorsqu'on mélange divers produits organiques, ceux-ci entrent en fermentation.

En présence d'air, il s'agit d'une fermentation aérobie, ou compostage.

Cette fermentation, qui nécessite une consommation en oxygène, s'accompagne, notamment, d'une élévation en température, d'un dégagement de gaz carbonique, et d'une production d'eau.

S'agissant d'un compostage rustique, l'apport d'oxygène nécessaire est facilité en procédant de temps à autre à un retournement des andains.

Mais il en résulte que, avec par ailleurs une emprise au sol importante, le temps de compostage correspondant est relativement long, de l'ordre de six mois en moyenne.

En outre, dans l'intervalle, deux à trois retournements sont nécessaires, ce qui nécessite des engins appropriés à cet effet et mobilise de la main d'oeuvre.

De plus, une consommation relativement importante en produits annexes faisant office de supports carbonés est le plus souvent nécessaire, au détriment des coûts, et les quantités de produits résiduels obtenus, elles-mêmes importantes, notamment en poids, parce que encore très riches en eau, peuvent être difficiles à écouler sur le marché.

Enfin, la maîtrise des odeurs est problématique dans le cas du traitement de certains produits, au préjudice de l'environnement.

Pour accélérer, notamment, le processus de compostage, et réduire ainsi le temps nécessaire à celui-ci, diverses solutions ont été envisagées, qui, en général, mettent en oeuvre une aération forcée, avec insufflation ou aspiration d'air ou de gaz.

Ces solutions sont par exemple évoquées dans le préambule du brevet français qui, déposé sous le No 82 05139, a été publié sous le No 2.523.953.

Elles y sont tenues comme ne pouvant pas conduire à une exploitation industrielle.

Comme mentionné dans le brevet français qui, déposé sous le No 82 00949, a été publié sous le No 2.519.972, il a été par ailleurs proposé de réguler l'activité respiratoire des produits en cours de traitement en modulant le débit d'air qui leur est insufflé en fonction d'une grandeur, telle que la teneur en gaz carbonique des gaz rejetés, ou la température, en pratique celle de ces produits eux-mêmes, tenue pour être à l'image de cette activité.

Mais l'expérience montre qu'avec une telle régulation il n'est pas possible non plus d'aboutir à une exploitation industrielle satisfaisante.

La présente invention a pour objet un procédé et une installation qui, propres au traitement, par voie biologique, d'un quelconque produit organique humide et fermentescible, sont au contraire avantageusement susceptibles d'une exploitation industrielle satisfaisante.

Elle est fondée sur la découverte, non mise en évidence à ce jour, que toute grandeur, supposée liée à l'état du produit en cours de traitement, n'est pas totalement significative du niveau énergétique de celui-ci.

Il apparaît, en effet, à l'expérience, et les essais le confirment, que ce niveau énergétique, le seul en définitive à prendre en considération, dépend aussi de l'âge du produit, c'est-à-dire du laps de temps qui s'est écoulé depuis le début de son traitement.

Sur cette base, le procédé de ventilation et de régulation suivant l'invention, qui est du genre suivant lequel on fait circuler de l'air à travers le produit à traiter tout en assurant une régulation du débit d'air correspondant impliquant le relevé de la valeur d'une grandeur liée à l'état de ce produit, est, d'une manière générale, caractérisé en ce que on compare la valeur ainsi relevée de la grandeur concernée à une valeur donnée, programmée à l'avance et considérée comme idéale pour le débit d'air du moment, et on modifie ce débit d'air si la valeur relevée s'écarte de cette valeur idéale.

Ainsi, suivant l'invention, la régulation se superpose à une programmation.

Préférentiellement, parce que cela est relativement aisé à mettre en oeuvre, on choisit comme grandeur à relever la température, mais il s'agit non pas de la température du produit lui-même, qui peut varier avec le point de prélèvement dans celui-ci, mais de la température de l'air sortant, qui, peu ou prou, intègre avantageusement les variations éventuelles de la précédente.

Il s'avère, en outre, que, passé un temps déterminé, de l'ordre par exemple d'une semaine, il est avantageusement possible de se satisfaire, au moins en première approximation, comme valeur idéale pour la température de l'air sortant, d'une valeur évoluant de manière quasi linéaire.

Cette quasi linéarité est avantageusement relativement facile à respecter.

Préférentiellement, pour réduire le refroidissement en surface du produit traité, et éviter ainsi que ne s'y développe de manière intempestive une certaine condensation, on assure, suivant l'invention, une protection latérale, au moins partielle, de ce produit, en étendant par exemple cette protection latérale sur au moins la moitié de sa hauteur.

Préférentiellement, également, la circulation d'air se fait pour l'essentiel par aspiration à partir de la base du produit à traiter.

Ainsi la couche de ce produit par laquelle se fait la sortie de l'air en est la couche inférieure.

Outre que cette couche inférieure se trouve parfaitement protégée thermiquement par les couches supérieures, elle est ainsi balayée par de l'air qui, ayant traversé ces couches supérieures, est chaud.

Sa température reste donc avantageusement systématiquement élevée, et si, malgré cela, il s'y produit une certaine condensation, l'humidité correspondante échappe rapidement par gravité au produit, sans réhumidification d'une partie significative de celui-ci.

De même, si, par la pluie, il intervient une certaine réhumidification des couches supérieures du produit, cette réhumidification est alors pratiquement sans incidence sur l'évolution de celui-ci.

En effet, elle ne porte alors que sur une fraction déjà convenablement fermentée, froide et sèche, de ce produit.

Ainsi, si désiré, le procédé de traitement suivant l'invention peut avantageusement intervenir à l'air libre.

Enfin, l'air traversant le produit en cours de traitement étant aspiré à la base de celui-ci, le procédé de traitement suivant l'invention est favorable à une élimination systématique quasi totale des odeurs dégagées par ce produit, ces odeurs étant pour l'essentiel dues à des substances qui, condensées avec l'eau véhiculée par l'air sortant, sont ensuite entraînées par cette dernière et évacuées avec elle.

Il est à souligner que, tout en s'apparentant à un compostage, et plus particulièrement à un compostage accéléré par aération forcée, en ayant en commun avec lui de tirer parti d'une production d'énergie in situ, le procédé de traitement suivant l'invention s'en distingue nettement.

Tout d'abord, orienté vers une évacuation maximale de la teneur en eau du produit traité, il conduit rapidement à une déshydratation notable de celui-ci, et donc à sa stabilisation.

Il s'agit donc plus, de ce point de vue, d'un traitement de déshydratation et de stabilisation que d'un traitement de compostage.

En outre, lorsque, de manière optionnelle, et préalablement à son traitement, on mélange le produit à traiter avec au moins un autre produit propre à conférer à l'ensemble des caractéristiques de structure de nature à y faciliter la circulation de l'air, cet autre produit, qu'il s'agisse d'un support carboné ou d'un produit inerte, n'intervient que peu ou pas dans le traitement lui-même du produit à traiter, alors que, dans un compostage, c'est, le plus souvent, un tel support carboné qui est dégradé, et non les déchets qui lui sont additionnés.

Il en résulte que, avec le procédé de traitement suivant l'invention, une partie au moins de cet autre produit peut, si désiré, être avantageusement et économiquement recyclée.

En bref, le procédé de traitement suivant l'invention :
- conduit avantageusement à une réduction notable du temps de fermentation nécessaire, ce temps de fermentation pouvant être ramené à environ un mois, voire même moins,
- conduit également avantageusement à une forte réduction de la teneur en eau du produit résiduel, cette teneur en eau, mesurée en pourcentage par rapport au produit brut, pouvant en pratique être réduite au moins de moitié, avec une réduction, dans les mêmes proportions, du poids de ce produit résiduel, et, donc, avec une économie sensible de ses coûts de transport et/ou de mise en décharge,
- permet une bonne maîtrise des émanations odorantes,
- permet une récupération d'énergie sur l'air extrait et ce sans préjudice pour les fermentations,
- se satisfait, lorsqu'un autre produit est à mettre en oeuvre pour la structuration de l'ensemble, d'une consommation relativement faible de cet autre produit,
- n'implique que de faibles coûts en main d'oeuvre et en énergie,
- et, ne nécessitant aucun équipement fragile et coûteux, peut avantageusement être mis en oeuvre dans

EP 0 391 753 A1

des installations qui, relativement frustes, sont économiques à réaliser, fiables et robustes.

La présente invention a encore pour objet une telle installation.

Cette installation comporte au moins un réacteur.

Selon une forme particulière, et préférée, de réalisation, ce réacteur comporte, à sa base, un réseau perforé propre à permettre une circulation d'air à travers le produit à traiter, avec au moins une nourrice, dite primaire, qui une fois reliée à ce réseau perforé, est propre à une circulation effective d'air dans celui-ci.

Mais d'autres formes de réalisation sont envisageables.

Quoi qu'il en soit, il est de préférence prévu en parallèle une batterie de tels réacteurs, chacun correspondant à un état d'évolution différent du produit traité.

Il y a avantageusement ainsi une minimisation de la puissance globale à installer, par une optimisation rationnelle de son utilisation.

Quant au produit résiduel obtenu au terme du procédé de traitement suivant l'invention, il peut s'agir d'un produit directement utilisable, notamment comme produit d'amendement pour les sols, substrat de culture, aliment pour le bétail, ou combustible.

Mais il peut s'agir aussi d'un produit semi-fini qu'il est souhaitable de retravailler, par exemple par adjonction d'un ou plusieurs composants, avant sa mise sur le marché.

Dans tous les cas, et comme déjà relevé ci-dessus, sa teneur en eau, réduite, en facilite avantageusement la manipulation et le stockage.

En outre, il s'avère que le procédé de traitement suivant l'invention conduit à une transformation physique des produits auxquels il est appliqué dont il résulte que ceux-ci deviennent remarquablement fluants, ce qui facilite, encore, leur manipulation, et ce qui, notamment, en facilite le criblage si un tel criblage est souhaité.

Les caractéristiques et avantages de l'invention ressortiront d'ailleurs de la description qui va suivre, à titre d'exemple, en référence aux dessins schématiques annexés sur lesquels :

la figure 1 est un bloc diagramme illustrant les diverses étapes d'un procédé de traitement suivant l'invention ;

la figure 2 est une vue en perspective d'une installation propre à la mise en oeuvre de ce procédé ;

la figure 3 est, à échelle supérieure, une vue partielle en coupe transversale de cette installation, suivant la ligne III-III de la figure 2 ;

la figure 4 en est, à échelle différente, une vue partielle en coupe longitudinale, suivant la ligne IV-IV de la figure 2 ;

la figure 5 en est, à l'échelle de la figure 4, une vue arrière, suivant la ligne V-V de la figure 4 ;

la figure 6 reprend, à échelle supérieure, et avec un arrachement, le détail de réalisation repéré par un encart VI sur la figure 5 ;

la figure 7 reprend, à échelle encore supérieure, et en coupe longitudinale, le détail de réalisation repéré par un encart VII sur la figure 6 ;

la figure 8 est un diagramme illustrant l'évolution d'un produit au cours de son traitement dans l'installation suivant l'invention ;

la figure 9 est une vue partielle en coupe transversale analogue à celle de la figure 3, pour une variante de réalisation ;

la figure 10 est une vue en perspective analogue à celle de la figure 2, pour une autre variante de réalisation.

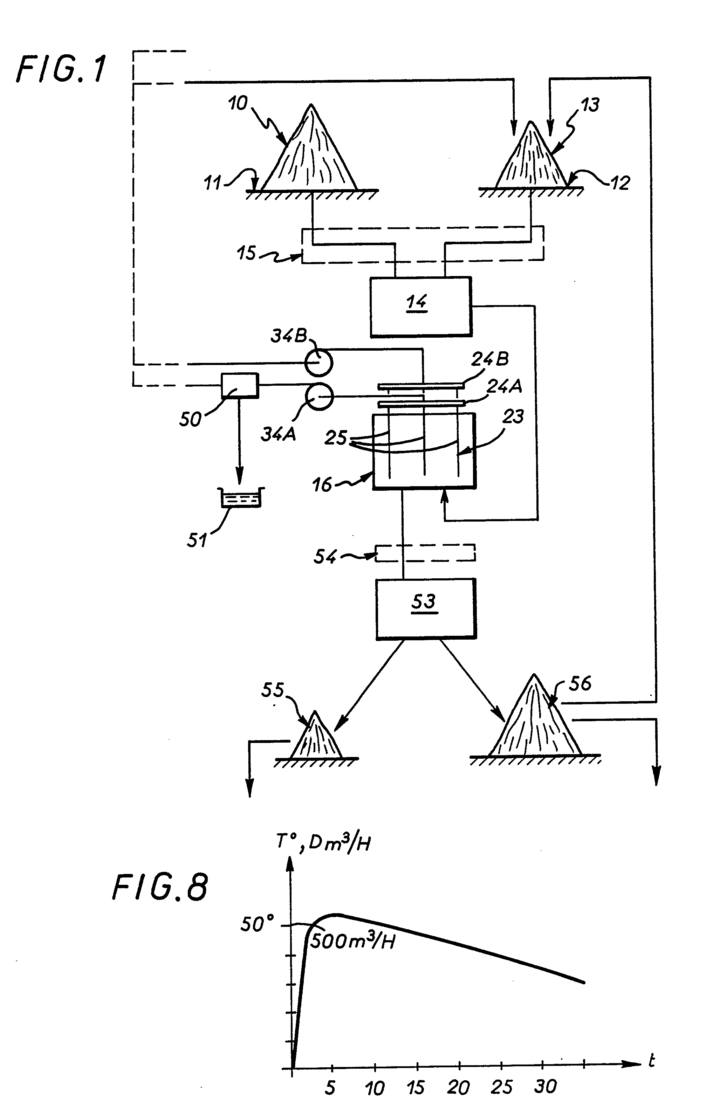

Tel qu'illustré schématiquement à la figure 1, le produit 10 à traiter est stocké sur une quelconque aire de stockage 11.

S'agissant d'un produit humide à déshydrater, ce stockage est de préférence effectué à l'abri d'une couverture, non représentée.

Il peut avantageusement être tiré parti de celle-ci, pour obtenir, par effet de serre, un préchauffage de ce produit 10.

Il suffit, pour ce faire, d'utiliser, comme couverture, une couverture transparente.

Dans un tel cas, l'air confiné par cette couverture est lui-même préchauffé, et, ainsi qu'il apparaîtra ci-après, il peut avantageusement en être tiré parti.

Dans la forme de mise en oeuvre représentée se trouve stocké, sur une autre aire de stockage 12, un autre produit 13 à mélanger au produit 10 à traiter préalablement au traitement de celui-ci, cet autre produit 13 étant choisi pour être propre à conférer à l'ensemble des caractéristiques de structure de nature à y faciliter la circulation d'air.

Suivant le produit 10 à traiter, il peut s'agir, si désiré, d'un produit faisant office de support carboné, et, par exemple, d'écorces, de paille de lavande, de rafles de raisin, de rafles de maïs, de déchets d'élagage,

4

de plaquettes de bois, de cagettes, ou de divers autres déchets végétaux.

Mais il peut également s'agir d'un produit inerte et/ou minéral, tels que galets ou graviers.

Le produit 13 ainsi éventuellement à mélanger avec le produit 10 à traiter est, en pratique, déterminé par l'expérience, et, suivant des dispositions qui, ne relevant pas en propre de la présente invention, ne seront pas décrites en détail ici, il peut éventuellement lui être adjoint au moins un autre additif.

Mais il va de soi que si le produit 10 à traiter présente par lui-même une structure satisfaisante, il n'est pas impératif de le mélanger avec un quelconque autre produit.

Lorsque, comme en l'espèce, et comme schématisé en trait plein 14 sur la figure 1, un tel mélange intervient, il est préférentiellement précédé, tel que schématisé en traits interrompus 15 sur cette figure 1, d'un dosage convenable des divers ingrédients concernés.

De manière très simple, les prélèvements sur les aires de stockage 11, 12 se faisant à l'aide d'un engin à godet, ce dosage se fait à vue, en comptabilisant le nombre de godets prélevés, à raison par exemple d'un godet de produit 10 à traiter pour un à deux godets de produit 13.

Si nécessaire, le mélange du produit à traiter 10 avec le produit 13, et un éventuel additif, s'accompagne d'un broyage de l'ensemble.

Le mélange obtenu est ensuite chargé dans un réacteur 16.

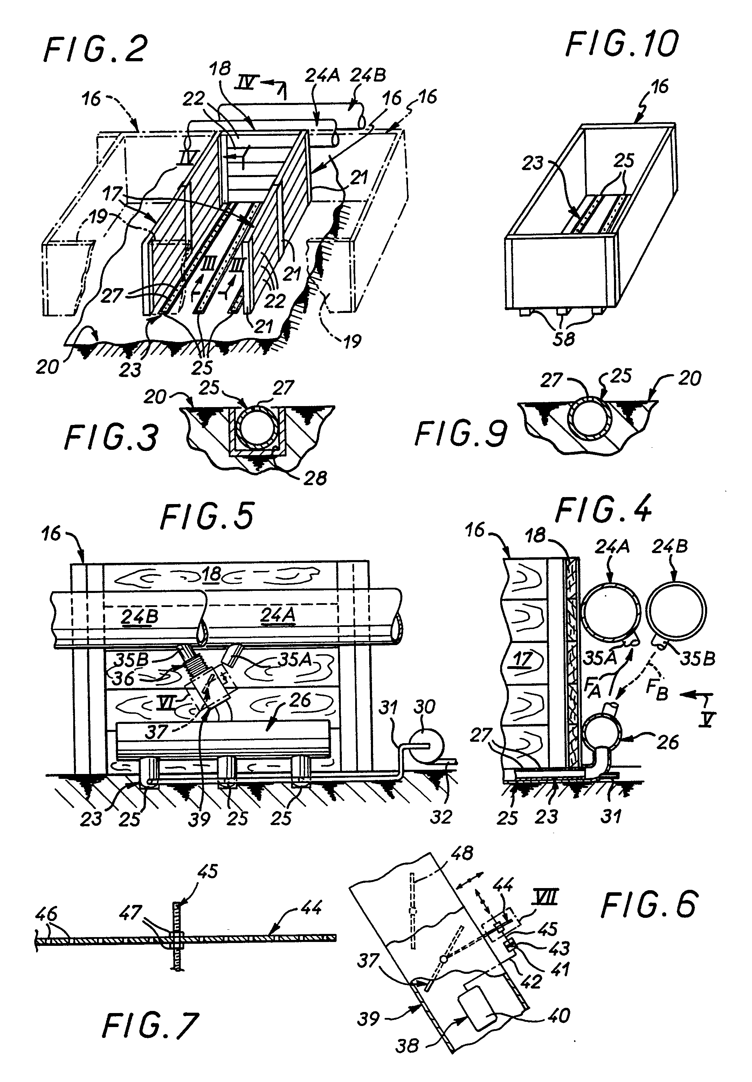

Dans la forme de réalisation représentée sur les figures 2 à 4, il s'agit d'un réacteur qui intervient à l'air libre, et qui, ouvert vers le haut à sa partie supérieure, est simplement formé par des parois 17, 18 directement dressées sur un sol 20, suivant un contour, en plan, globalement rectangulaire.

Plus précisément, dans cette forme de réalisation, le réacteur 16 est dépourvu de paroi fixe sur l'un de ses côtés, pour qu'un engin de chargement ou de déchargement puisse y pénétrer directement.

Il n'est donc formé à demeure que de deux parois latérales 17, établies parallèlement l'une à l'autre, et d'une paroi de fond 18, perpendiculaire aux précédentes.

Ces parois peuvent être réalisées en béton ou en parpaings.

Mais, de manière très simple et économique, elles sont de préférence réalisées à l'aide de poteaux métalliques 21 et de planches de bois 22 établies de l'un à l'autre de ceux-ci, ces planches de bois 22 présentant par elles-mêmes des qualités d'isolation thermique intéressantes et pouvant facilement être changées si nécessaire.

Les dimensions du réacteur 16 ainsi délimité sont indifférentes.

Par exemple, elles peuvent être de l'ordre de 12 m de long pour 2 m de haut, mais ces valeurs numériques ne doivent pas être considérées comme en quoi que ce soit limitatives de l'invention.

Cependant, les parois 17 et 18, qui sont destinées à assurer une protection latérale, au moins partielle, du produit à traiter, s'étendent de préférence sur au moins la moitié de la hauteur de celui-ci.

En outre, il peut leur être adjoint, si désiré, et tel que schématisé en traits interrompus à la figure 2, une paroi de tête 19, qui, amovible, est propre à compléter cette protection latérale, en fermant sur son quatrième côté le réacteur 16 après son chargement.

Le sol 20 peut être le sol naturel, plus ou moins traité, au sable-ciment par exemple.

Il peut également s'agir d'une chape en béton maigre ou en enrobé.

Il lui est de préférence donné une faible pente, pour faciliter l'écoulement des eaux.

Quoi qu'il en soit, le réacteur 16 suivant l'invention comporte, à sa base, un réseau perforé 23 propre à permettre une circulation d'air à travers le mélange qu'il contient, avec, en parallèle, deux nourrices 24A, 24B, dites ici par simple commodité nourrices primaires, chacune susceptible d'être individuellement branchée, suivant des dispositions décrites plus en détail ultérieurement, sur ledit réseau perforé 23, la première pour aspiration d'air à travers le mélange sus-jacent, l'autre pour insufflation d'air dans celui-ci.

Dans la forme de réalisation représentée sur les figures 2 à 4, ce réseau perforé 23 comporte une pluralité de canalisations perforées 25, qui, allongées parallèlement les unes aux autres, en pratique parallèlement aux parois latérales 17 du réacteur 16, sont toutes reliées, à l'une de leurs extrémités, à une même nourrice 26, dite ici par simple commodité nourrice secondaire, disposée à l'arrière de la paroi de fond 18 de ce réacteur 16, et qui, à l'autre de leurs extrémités, sont toutes chacune individuellement en cul-de-sac.

Dans la forme de réalisation représentée, trois canalisations perforées 25 sont ainsi prévues, de manière à ménager entre elles l'espace propre au passage d'un engin de chargement et/ou de déchargement, leur écartement correspondant à l'empattement de celui-ci.

Il s'agit, par exemple, de tubes en matière synthétique présentant, le long de leur génératrice supérieure, des perforations 27, par exemple de légères fentes transversales.

Préférentiellement, il s'agit de tubes en polyéthylène, cette matière présentant les avantages d'une bonne résistance au poinçonnement, d'un faible coût, et d'une relative facilité d'entretien.

Quoi qu'il en soit, les canalisations perforées 25 ainsi mises en oeuvre sont sensiblement à ras avec le sol 20, seule émergeant de celui-ci leur partie perforée.

Dans la forme de réalisation représentée sur la figure 3, les canalisations perforées 25 s'étendent ainsi chacune individuellement à la faveur d'un caniveau 28, formé par exemple à l'aide de parpaings, ce qui permet de les changer facilement, si nécessaire.

En variante, figure 9, elles peuvent être directement enfouies à même le sol 20.

· Quoi qu'il en soit, ces canalisations perforées 25 s'étendent, de préférence, sensiblement à l'horizontale, avec une légère contre-pente en direction de la nourrice secondaire 26 à laquelle elles sont reliées, et il leur est associé des moyens d'évacuation propres à en soutirer l'eau qui s'y condense, ces moyens d'évacuation comportant par exemple une pompe 30 sur l'aspiration de laquelle est branchée une conduite 31 qui, par des ramifications appropriées, plonge dans les canalisations perforées 25, à la partie basse de celles-ci.

Par une canalisation 32, le refoulement de cette pompe 30 est par exemple relié à l'égout.

Dans la forme de réalisation représentée, la nourrice secondaire 26 s'étend transversalement par rapport aux canalisations perforées 25, et elle est constituée par un tronçon de conduite dûment obturé à ses extrémités.

De même, les nourrices primaires 24A, 24B, qui, comme la nourrice secondaire 26, s'étendent, parallèlement l'une à l'autre, à l'arrière de la paroi de fond 18 du réacteur 16, sont par exemple constituées de tronçons de conduite.

Elles sont, chacune respectivement, dûment raccordées à une soufflante 34A, 34B, qui n'est pas visible sur les figures 2 à 4, mais qui a été schématisée sur la figure 1.

Chacune de ces nourrices primaires 24A, 24B comporte un raccord en T 35A, 35B, plus ou moins incliné, par lequel elle peut être reliée, par l'intermédiaire d'une manchette souple 36, figure 5, au réseau perforé 23 du réacteur 16.

En pratique, le débit d'air circulant dans le réacteur 16 ainsi constitué est contrôlé par un dispositif de régulation comportant, en combinaison, d'une part, une vanne 37, dite de régulation, et, d'autre part, une sonde 38, dite thermique, à laquelle est asservie ladite vanne de régulation 37, et qui, sensible à la température, est immergée dans l'air sortant de ce réacteur 16.

Dans la forme de réalisation représentée, la vanne de régulation 37 et la sonde thermique 38 sont disposées à l'intérieur d'un caisson 39 intervenant entre la manchette souple 36 et la nourrice secondaire 26.

Par exemple, et tel que représenté, la vanne de régulation 37 est une vanne papillon.

La sonde thermique 38 comporte, elle, un ensemble de volume variable, qui contient de préférence du liquide à fort coefficient de dilatation thermique, et dont une paroi mobile 43 est attelée à la commande 44 de la vanne de régulation 37.

Dans la forme de réalisation représentée, l'ensemble de volume variable de la sonde thermique 38 est formé de deux récipients 40, 41, dont les volumes internes sont reliés l'un avec l'autre par une canalisation 42 et dont un, le récipient 40, plus grand que l'autre, est fixe, tandis que l'autre, le récipient 41, plus petit que le précédent, comporte la paroi mobile 43 correspondante.

Comme le récipient 40, le récipient 41 peut être disposé à l'intérieur du caisson 39.

C'est seulement pour une meilleure clarté du dessin que, sur la figure 6, il a été représenté à l'extérieur de ce caisson 39.

Dans la forme de réalisation représentée, la paroi mobile 43 est constituée par un piston, le récipient 41 correspondant étant par exemple constitué par une seringue.

Mais, en variante, cette paroi mobile 43 pourrait tout aussi bien appartenir à un soufflet, voire même être constituée par un tel soufflet.

Quoi qu'il en soit, cette paroi mobile 43 est attelée à la commande 44 de la vanne de régulation 37 par une tige 45.

Alors que la commande 44 de la vanne de régulation 37 est par exemple constituée par une simple tringle rigide calée en rotation sur l'axe de cette vanne de régulation 37, la tige 45 est, préférentiellement, une tige flexible.

En outre, cette tige flexible 45 est, préférentiellement, attelée à la commande 44 de manière réglable en position, tant longitudinalement que transversalement.

Par exemple, et tel que représenté, figure 7, la commande 44 présente, longitudinalement, une série de trous 46, et la tige flexible 45, qui est filetée à son extrémité, traverse l'un de ces trous, en étant bloquée de manière réglable en position sur cette commande 44 par deux écrous 47 intervenant chacun respectivement de part et d'autre de celle-ci.

Bien entendu, pour le pilotage de la vanne de régulation 37, toute autre sonde thermique peut convenir.

En outre, et tel que schématisé sur la figure 6, il est également prévu, en amont de la vanne de régulation 37, dans le caisson 39, une vanne 48, dite de programmation.

Cette vanne 48 peut être à commande manuelle, ou être motorisée.

En outre, une seule et même vanne de programmation et de régulation peut être prévue, sous la dépendance par exemple d'un servo-moteur.

De préférence, les diverses nourrices 24A, 24B et 26 mises en oeuvre, ainsi que l'ensemble des conduits qui les desservent, sont calorifugés.

En pratique, et tel que schématisé en traits interrompus sur la figure 2, une installation suivant l'invention comporte, en batterie, une pluralité de réacteurs 16, ayant tous en commun les mêmes nourrices primaires 24A, 24B.

Par exemple, ces réacteurs 16 sont au nombre de quatre.

Quoi qu'il en soit, le chargement, dans un tel réacteur 16, du mélange à traiter se fait de préférence sur un lit d'écorces pour éviter l'obturation des perforations 27 des canalisations perforées 25 présentes à sa base.

Dans le mélange ainsi mis en place dans un réacteur 16 se développe alors naturellement une certaine fermentation.

Suivant l'invention, pour accélérer celle-ci, on fait circuler de l'air à travers ce mélange pendant une partie au moins de son séjour dans le réacteur 16.

Pour l'essentiel, cette circulation d'air se fait par aspiration, à partir de la nourrice primaire 24A, et, pour l'essentiel, elle se fait de manière continue.

Toutefois, pour initier la fermentation et/ou pour la relancer par intermittence, il peut être procédé, à partir de la nourrice primaire 24B, à un soufflage d'air chaud et sec à travers le mélange en cours de traitement dans le réacteur 16.

Il suffit, à chaque fois, de brancher en conséquence la manchette souple 36, tantôt sur le raccord 35A de la nourrice primaire 24A, suivant la flèche FA de la figure 4, tantôt sur le raccord 35B de la nourrice primaire 24B, suivant la flèche FB de cette figure 4.

Dans l'un et l'autre cas, la pression de l'air peut par exemple être de l'ordre de quelques millibars.

Suivant l'invention, pour la régulation du débit d'air circulant dans le réacteur 16, on relève la valeur d'une grandeur liée à l'état au produit à traiter 10 présent dans ce réacteur 16, on compare la valeur ainsi relevée de cette grandeur à une valeur donnée, programmée à l'avance et considérée comme idéale pour le débit d'air du moment, et on modifie ce débit d'air si la valeur relevée de la grandeur concernée s'écarte de cette valeur idéale.

En pratique, la grandeur choisie à cet effet est la température de l'air sortant.

Mais il pourrait tout aussi bien s'agir du degré hygrométrique de cet air sortant, ou de sa composition, et, plus particulièrement, de sa teneur en enzymes et de la nature de celles-ci, ou encore de toute autre grandeur susceptible de refléter l'état, à l'instant donné, du produit 10 en cours de traitement.

Mais il s'avère que la température de l'air sortant, qui est aisée à appréhender, est particulièrement significative à ce sujet.

Il s'avère, également, que passé un temps déterminé, de l'ordre par exemple d'une semaine, la valeur idéale pour la température de l'air sortant évolue de manière quasi linéaire.

Sur le diagramme de la figure 8, sont portés, en abscisses, le temps $t$, jours, et, en ordonnées, la température T de l'air sortant du réacteur 16, en degrés, ou le débit d'air D aspiré à travers ce réacteur 16, en m3 par heure.

La courbe correspondante, d'abord croissante, suivant sensiblement une droite de pente relativement élevée, est ensuite décroissante, suivant une droite de pente sensiblement plus faible que la précédente.

Bien entendu, cette courbe varie, en amplitude, d'un produit à un autre.

Mais l'expérience montre qu'elle a globalement même allure pour l'ensemble de ceux-ci.

Au cours de la première phase, la température croissant, il faut augmenter en conséquence le débit d'air aspiré.

Au cours de la deuxième phase, la plus longue, la température décroissant, il faut au contraire réduire parallèlement ce débit d'air.

En pratique, il a été observé que, au cours des cinq premiers jours, dans un réacteur contenant environ 40 à 50 tonnes de produit 10 à traiter, il est possible de faire circuler environ 500 m3/h d'air dont la température, à la sortie, est comprise entre par exemple 47 et 52° C, et dont le degré hygrométrique est alors égal à 100, ce qui correspond globalement à l'extraction d'une tonne d'eau par jour.

Entre le cinquième et le dixième jours, la température de l'air sortant n'est usuellement plus comprise qu'entre 47° C et 40° C, et le débit d'air aspiré peut être ramené à 450 m3/h.

Dans les cinq jours suivants, la température de l'air sortant descend de 42° C à 37° C, et le débit d'air correspondant peut alors être ramené à 400 m3/h.

Dans les cinq jours suivants, la température de l'air sortant descend encore entre 37°C et 32°C, et le débit d'air correspondant peut alors être limité à 350 m3/h.

Au-delà, il est possible soit de continuer à aspirer de l'air, soit d'insuffler temporairement de l'air chaud pour relancer la fermentation.

Mais, le plus souvent, le traitement ne s'étend globalement pas sur plus d'un mois.

Suivant l'invention, il est programmé en conséquence.

Pour la phase ascendante de la température, la programmation correspondante peut être assurée par action sur la vanne de programmation 48.

Au cours de la phase descendante de la température, le dispositif de régulation suivant l'invention, à vanne de régulation 37 et sonde thermique 38, permet, avantageusement, au moins en première approximation, d'assurer, de manière très simple, à la fois cette programmation et la régulation nécessaire pour le débit d'air aspiré.

En effet, si la température relevée par la sonde thermique 38 s'élève, elle commande en conséquence en ouverture la vanne de régulation 37, en provoquant donc une augmentation du débit d'air aspiré.

Conjointement, si la température relevée diminue, la sonde thermique 38 commande d'elle-même en fermeture la vanne de régulation 37, en provoquant donc une diminution concomitante du débit d'air aspiré.

Ainsi, le dispositif de régulation suivant l'invention assure de lui-même la linéarité à respecter entre l'évolution de la température de l'air sortant et celle du débit de celui-ci.

Il suffit donc, pour un produit déterminé, de régler en position de manière convenable la tige flexible 45 de la sonde thermique 38 par rapport à la commande 44 de la vanne de régulation 37, tant longitudinalement, un trou 46 de cette commande 44 convenant à chaque produit, que, transversalement, par les écrous 47, pour le réglage du point zéro correspondant.

Si désiré, le traitement suivant l'invention peut être momentanément interrompu, pour être repris après une manipulation mécanique du produit 10 traité, tel que retournement et/ou criblage.

Quoi qu'il en soit, le traitement suivant l'invention, pris globalement, est préférentiellement poursuivi pendant un temps suffisamment long pour que la teneur en eau du produit 10 traité, mesurée en pourcentage par rapport au produit 10 brut, soit au moins réduite de moitié.

L'expérieure montre que les besoins en oxygène du produit 10 traité se trouvent alors largement satisfaits, et que ce produit 10 se trouve ainsi convenablement stabilisé.

Si désiré, cependant, il peut être procédé, ensuite, par circulation d'air chaud dans le réacteur 16, à un séchage complémentaire du produit 10 traité, pour en abaisser encore la teneur en eau.

Quoi qu'il en soit, lorsque, comme en l'espèce, le produit 10 à traiter a été mélangé à un autre produit 13, il est procédé, au terme du séjour de l'ensemble dans le réacteur 16, à une séparation, par criblage, de ces deux produits 10 et 13, tel que schématisé en trait plein 53 à la figure 1, le criblage correspondant pouvant être éventuellement précédé par un émottage, tel que schématisé en traits interrompus 54 sur cette figure 1.

Le criblage effectué permet de séparer, du mélange traité, d'une part, une fraction fine 55, et, d'autre part, une fraction plus grossière 56.

La fraction fine 55 correspond à un produit dont les caractéristiques sont à l'image de celles du produit 10 initial, mais avec, notamment, comme déjà souligné précédemment, une teneur en eau largement moindre, puisque réduite au moins de moitié.

Ce produit peut être considéré comme un produit fini, ou comme un produit semi-fini à retravailler.

Quant à la fraction plus grossière 56, elle correspond à l'autre produit 13, et peut être en tout ou partie recyclée.

En pratique, ce recyclage de cet autre produit 13 peut atteindre 70 à 80 % de celui-ci.

En toute hypothèse, le produit 13 utilisé se trouve lui-même avantageusement valorisé du point de vue énergétique, sa teneur en eau étant également moindre.

Il résulte de ce qui précède que l'air sortant du réacteur 16, tel qu'extrait par la nourrice primaire 24A, est chaud et humide.

De préférence, et tel que schématisé sur la figure 1, cet air sortant passe dans une quelconque machine thermique 50, et par exemple une simple pompe à chaleur, en vue d'en récupérer une partie au moins de l'énergie.

Il en est ainsi extrait, d'une part, de l'air chaud et sec, qui, tel que schématisé en traits interrompus sur la figure 1, peut être utilisé, comme indiqué précédemment, à un soufflage d'air chaud et/ou sec dans le réacteur 16, à un préchauffage du produit 13, ou à une quelconque autre application, et, d'autre part, de l'eau, qui est recueillie dans un bac 51 ou versée à l'égout.

Lorsque, comme indiqué précédemment, le produit 10 à traiter est stocké en serre, et que, donc, il peut aussi être récupéré de l'air chaud et humide dans la serre correspondante, cet air chaud et humide peut être traité, et utilisé, de la même façon.

Dans l'un et l'autre cas, et ainsi qu'on le notera, la récupération d'air chaud et humide, et donc d'énergie, se fait avantageusement sans une quelconque perturbation du processus de traitement suivi, et l'énergie ainsi récupérée est avantageusement utilisée dans le cours même de ce processus.

Lorsque, comme indiqué précédemment, il est mis en oeuvre, en parallèle, une batterie de réacteurs 16, chacun de ces réacteurs 16 peut avantageusement correspondre à un état d'évolution différent du produit 10 concerné.

Pour une meilleure illustration des possibilités de l'invention, il est donné ci-après, à titre d'exemples non limitatifs, les résultats d'un certain nombre d'essais ayant porté sur divers produits A, B, C, D et E.

Ces essais ont été pratiqués à l'aide de quatre réacteurs de 100 m3 chacun, les quantités de produits traités à chaque fois étant en moyenne de 40 tonnes par essai.

Dans ce tableau, on a successivement reporté, ligne par ligne, pour les divers produits A, B, C, D, E concernés :

- en 1 : la teneur en eau initiale,
- en 2 : la teneur en eau finale,
- en 3 : les quantités d'eau évaporée, en kg par tonne de produit traité, qu'il y ait, ou non, eu des précipitations atmosphériques,
- en 4 : le temps de séjour, en semaines, dans le réacteur.

|   | 1 | 2 | 3 | 4 |
|---|---|---|---|---|
| A | 60 % | 20 à 30 % | 400 à 500 | 4 à 6 |
| B | 80 à 85 % | 40 à 45 % | 600 à 700 | 4 à 6 |
| C | 85 à 90 % | 45 à 50 % | > 700 | 5 |
| D | 80 % | 45 % | 600 | 4 |
| E | 93 % | 55 % | > 800 | |

En pratique, les produits traités ont été les suivants :

A : boue d'épuration d'une usine de fabrication de gélatine, mélangée à des écorces de pin,

B : boue d'épuration d'une conserverie, mélangée à des écorces de pin,

C : boue d'épuration d'une installation industrielle pharmaceutique portant sur l'exploitation du pavot, mélangée à des écorces de pin,

D : sous-produits d'une installation industrielle traitant des déchets de cuir, mélangés à des écorces de pin,

E : sous-produits d'une installation industrielle portant sur l'extraction de la pectine à partir de citrus, mélangés à des rafles de maïs.

Pour les produits D et E, un séchage complémentaire avec de l'air chaud a permis d'abaisser la teneur en eau à 37 %.

Dans la variante de réalisation représentée sur la figure 10, un réacteur 16 suivant l'invention est formé par une benne, avec les canalisations perforées 25 qu'il comporte logées dans ses longerons 58.

Cette forme de réalisation présente les avantages d'une immédiate standardisation, et d'une utilisation possible pour d'autres applications.

Elle est en outre avantageusement modulable, ne nécessite pas de permis de construire pour sa mise en oeuvre, et ne peut être qu'à l'origine d'une nuisance réduite, tant en raison de la possibilité qu'il y a de la déplacer d'un point d'utilisation à un autre, qu'en raison de la facilité qu'il y a à la recouvrir si nécessaire.

La présente invention ne se limite d'ailleurs pas aux formes de réalisation décrites et représentées, mais englobe toute variante d'exécution et/ou de combinaison de leurs divers éléments.

En particulier, il peut être envisagé, notamment dans le cas d'une benne, de procéder à une circulation de bas en haut de l'air à travers le produit à traiter, soit par soufflage à partir du bas de ce produit, soit par aspiration à sa partie supérieure, en protégeant par exemple ce produit à traiter par une bâche, éventuellement surmontée d'un entonnoir.

Il peut également être tiré parti de moyens informatiques pour la programmation et/ou la régulation à assurer.

## Revendications

1. Procédé de ventilation et de régulation pour le traitement, en particulier déshydratation et stabilisation, par voie biologique, d'un quelconque produit organique humide et fermentescible (10), du genre suivant lequel on fait circuler de l'air à travers ledit produit tout en assurant une régulation du débit d'air correspondant impliquant le relevé de la valeur d'une grandeur liée à l'état de ce produit, caractérisé en ce que on compare la valeur ainsi relevée de la grandeur concernée à une valeur donnée, programmée à l'avance et considérée comme idéale pour le débit d'air du moment, et on modifie ce débit d'air si la valeur relevée de la grandeur s'écarte de sa dite valeur idéale.

2. Procédé suivant la revendication 1, caractérisé en ce que on choisit comme grandeur à relever la température (T) de l'air sortant.

3. Procédé suivant la revendication 2, caractérisé en ce que, passé un temps déterminé, de l'ordre par exemple d'une semaine, on choisit comme valeur idéale pour la température (T) de l'air sortant une valeur évoluant de manière quasi linéaire.

4. Procédé suivant l'une quelconque des revendications 1 à 3, caractérisé en ce que on assure une protection latérale (17, 18), au moins partielle, du produit (10) à traiter.

5. Procédé suivant la revendication 4, caractérisé en ce que on étend la protection latérale (17, 18) sur au moins la moitié de la hauteur du produit (10) à traiter.

6. Procédé suivant l'une quelconque des revendications 1 à 5, caractérisé en ce que la circulation d'air se fait pour l'essentiel par aspiration à partir de la base du produit (10) à traiter.

7. Procédé suivant la revendication 6, caractérisé en ce que l'aspiration d'air se fait pour l'essentiel de manière continue.

8. Procédé suivant l'une quelconque des revendications 6, 7, caractérisé en ce que, pour initier la fermentation, et/ou la relancer, il est éventuellement procédé à un soufflage d'air chaud et sec à travers le produit (10) à traiter.

9. Procédé suivant l'une quelconque des revendications 1 à 8, caractérisé en ce qu'il est poursuivi pendant un temps suffisamment long pour que la teneur en eau du produit (10) traité, mesurée en pourcentage par rapport au produit (10) brut, soit au moins réduite de moitié.

10. Procédé suivant l'une quelconque des revendications 1 à 9, caractérisé en ce que, momentanément interrompu, il est repris après une manipulation mécanique du produit (10) traité, tel que retournement et/ou criblage.

11. Procédé suivant l'une quelconque des revendications 1 à 10, caractérisé en ce que le produit (10) à traiter étant disposé dans un réacteur (16), il est prévu en parallèle une batterie de tels réacteurs (16), chacun correspondant à un état d'évolution différent dudit produit (10).

12. Procédé suivant l'une quelconque des revendications 1 à 11, caractérisé en ce que, préalablement à son traitement, on mélange le produit (10) à traiter avec au moins un autre produit (13) propre à conférer à l'ensemble des caractéristiques de structure de nature à y faciliter la circulation d'air.

13. Procédé suivant la revendication 12, caractérisé en ce que, au terme du traitement, les deux produits (10, 13) traités sont séparés par criblage.

14. Procédé suivant la revendication 13, caractérisé en ce que le produit (13) initialement ajouté au produit (10) à traiter est au moins en partie recyclé.

15. Installation de ventilation et de régulation pour le traitement, en particulier déshydratation et stabilisation, d'un quelconque produit humide et fermentescible, caractérisée en que, en vue de la mise en oeuvre du procédé suivant l'une quelconque des revendications 1 à 14, elle comporte au moins un réacteur (16), qui, propre à recevoir le produit (10) à traiter, comporte, à sa base, un réseau perforé (23) propre à permettre une circulation d'air à travers celui-ci, avec au moins une nourrice (24A, 24B), dite primaire, qui, une fois reliée audit réseau perforé (23), est propre à une circulation effective d'air dans celui-ci.

16. Installation suivant la revendication 15, caractérisée en ce que le débit d'air circulant dans le réacteur est contrôlé par un dispositif de régulation comportant, en combinaison, d'une part, une vanne (37), dite de régulation, et, d'autre part, une sonde (38), dite thermique, à laquelle est asservie ladite vanne de régulation (37), et qui, sensible à la température, est immergée dans l'air sortant du réacteur (16).

17. Installation suivant la revendication 16, caractérisée en ce que la sonde thermique (38) comporte un ensemble de volume variable, qui contient de préférence du liquide à fort coefficient de dilatation thermique, et dont une paroi mobile (43) est attelée à la commande (44) de la vanne de régulation (37).

18. Installation suivant la revendication 17, caractérisée en ce que l'ensemble de volume variable est formé de deux récipients (40, 41), dont les volumes internes sont reliés l'un avec l'autre, et dont un, plus grand, est fixe, tandis que l'autre, plus petit, comporte la paroi mobile.

19. Installation suivant l'une quelconque des revendications 17, 18, caractérisée en ce que la paroi mobile (43) est constituée par un piston.

20. Installation suivant l'une quelconque des revendications 17, 18, caractérisée en ce que la paroi mobile (43) appartient à un soufflet.

21. Installation suivant l'une quelconque des revendications 17 à 20, caractérisée en ce que la paroi mobile (43) est attelée à la commande (44) de la vanne de régulation (37) de manière réglable en position, tant longitudinalement que transversalement.

22. Installation suivant l'une quelconque des revendications 16 à 21, caractérisée en ce que la vanne de régulation (37) intervient sur l'air sortant du réacteur (16).

23. Installation suivant l'une quelconque des revendications 15 à 22, caractérisée en ce qu'elle comporte, en parallèle, deux nourrices primaires (24A, 24B), chacune susceptible d'être individuellement branchée sur le réseau perforé (23), l'une pour aspiration d'air, l'autre pour insufflation.

24. Installation suivant la revendication 23, caractérisée en ce que chacune des nourrices primaires (24A, 24B) comporte un raccord en T (35A, 35B) par lequel elle peut être reliée, par l'intermédiaire d'une manchette souple (36), au réseau perforé (23).

25. Installation suivant l'une quelconque des revendications 15 à 24, caractérisée en ce que le réseau perforé (23) présent à la base du réacteur (16) comporte une pluralité de canalisations perforées (25) qui, allongées parallèlement les unes aux autres, sont toutes reliées à une même nourrice (26), dite nourrice secondaire, à l'une de leurs extrémités, et sont chacune individuellement en cul-de-sac à l'autre de celles-ci.

26. Installation suivant la revendication 25, caractérisée en ce que le réacteur (16) est formé par des parois (17, 18) dressées sur le sol (20) et les canalisations perforées (25) sont sensiblement à ras avec ce dernier, seule en émergeant, suivant sensiblement une génératrice, leur partie perforée.

27. Installation suivant la revendication 26, caractérisée en ce que les canalisations perforées (25) s'étendent chacune à la faveur d'un caniveau (28).

28. Installation suivant la revendication 26, caractérisée en ce que les canalisations perforées (25) sont toutes enfouies à même le sol (20).

29. Installation suivant l'une quelconque des revendications 26 à 28, caractérisée en ce que les canalisations perforées (25) s'étendent sensiblement à l'horizontale, avec une légère contre-pente en direction de la nourrice secondaire (26) à laquelle elles sont reliées, et il leur est associé des moyens d'évacuation propres à en soutirer l'eau qui s'y condense.

30. Installation suivant l'une quelconque des revendications 26 à 29, caractérisée en ce que, pour qu'un engin de chargement ou de déchargement puisse y pénétrer, le réacteur (16) est ouvert sur l'un de ses côtés.

31. Installation suivant la revendication 30, caractérisée en ce que le côté ouvert du réacteur (16) est susceptible d'être fermé par une paroi de tête amovible (19).

32. Installation suivant la revendication 25, caractérisée en ce que le réacteur (16) est formé par une benne, avec les canalisations perforées (25) qu'il comporte logées dans ses longerons (58).

33. Installation suivant l'une quelconque des revendications 15 à 32, caractérisée en ce que le réacteur (16) est ouvert à sa partie supérieure.

34. Installation suivant l'une quelconque des revendications 15 à 33, caractérisée en ce qu'elle comporte, en batterie, une pluralité de réacteurs (16).

FIG.1

FIG.8

FIG.2

FIG.10

FIG.3

FIG.9

FIG.5

FIG.4

FIG.7

FIG.6

| | | Office européen des brevets | RAPPORT DE RECHERCHE EUROPEENNE | |
|---|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-40147 (J.J. WEYNANDT) <br> * page 16, ligne 1 - page 18, ligne 25 * <br> * page 20, lignes 27 - 33 * <br> * page 21, lignes 4 - 7 * <br> * page 22, ligne 26 - page 25, ligne 4 * <br> * page 25, ligne 29 - page 26, ligne 23 * <br> * page 29, ligne 25 - page 31, ligne 1 * <br> * page 31, ligne 15 - page 32, ligne 13 * <br> * page 32, ligne 31 - page 33, ligne 2 * | 1, 2 <br><br> 4-6 <br> 9, 11 <br> 12, 15 <br> 25-27 <br> 30, 31 <br> 33, 34 | C05F17/00 <br> C05F17/02 <br> F26B21/06 |
| Y | | 3, 7, 8, <br> 13, 14, <br> 16-18, <br> 20 <br> 22, 23, <br> 28, 29 | |
| | ---- | | |
| X | DE-A-3401889 (F.J. WYSS et al.) <br> * revendications 1, 11-13, 15 * <br> * revendications 17-21, 36 * <br> * page 14, lignes 18 - 23 * <br> * page 15, lignes 25 - 31 * <br> * page 19, lignes 6 - 10 * | 1, 2, 6, <br> 7 | |
| | --- | | DOMAINES TECHNIQUES RECHERCHES (Int. Cl.5 ) |
| Y | GB-A-676123 (SERCK RADIATORS LTD) <br> * page 1, lignes 11 - 20 * <br> * page 1, ligne 80 - page 2, ligne 3; figure 2 * | 16-18, <br> 20, 22 | C05F <br> F26B <br> G05D <br> F24F |
| | --- | | |
| Y | US-A-3976245 (J.D. COLE) <br> * colonne 3, lignes 6 - 62; revendications * | 16-18, <br> 20, 22 | |
| | --- | | |
| Y | EP-A-112996 (IPLA-ISTITUTO PER LE PIANTE DA LEGNO E L'AMBIENTE S.p.A.) <br> * page 7, ligne 17 - page 8, ligne 13; revendications 1-3 * | 13, 14 | |
| | --- | | |
| Y | GB-A-886485 (NATURIZER CO.) <br> * page 2, lignes 72 - 105; figure 1 * | 3 | |
| A | | 10 | |
| | --- <br> -/-- | | |

Le présent rapport a été établi pour toutes les revendications

| Lieu de la recherche | Date d'achèvement de la recherche | Examinateur |
|---|---|---|
| LA HAYE | 21 MAI 1990 | SCHUT R.J. |

EPO FORM 1503 03.82 (P0402)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2186405 (HAZEMAG DR. E. ANDREAS KG) <br> * revendication 8 * | 23 | |
| Y | DE-B-2319081 (Voith-Müllex GmbH) <br> * colonne 3, ligne 4 - colonne 4, ligne 7; figure 1 * | 29 | |
| Y | FR-A-2303776 (P.A. KROCZYNSKI) <br> * page 2, ligne 30 - page 3, ligne 10 * <br> * page 3, ligne 21 - page 4, ligne 12 * | 8 | |
| Y | DE-C-700737 (Société Eau et Assainissement) <br> * revendications * | 7 | |
| Y | DE-B-1582111 (Voith-Müllex GmbH) <br> * colonne 1, lignes 15 - 32 * | 28 | |
| A | FR-A-1462221 (F. PRAT) <br> * Résumé * | 32 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 21 MAI 1990 | SCHUT R.J. |